# EUROPÄISCHE PATENTSCHRIFT

(11) **EP 1 246 693 B1**
(45) Veröffentlichungstag und Bekanntmachung des Hinweises auf die Patenterteilung: **07.04.2004**
(21) Anmeldenummer: 01902297.9
(22) Anmeldetag: 09.01.2001
(51) Int. Cl.: B01J 13/18, B41M 5/165

(54) **NIEDRIGVISKOSE, FORMALDEHYDREDUZIERTE DISPERSIONEN VON MIKROKAPSELN AUS MELAMIN-FORMALDEHYD-HARZEN**
LOW-VISCOSITY MELAMINE-FORMALDEHYDE RESIN MICROCAPSULE DISPERSIONS WITH REDUCED FORMALDEHYDE CONTENT
DISPERSIONS DE MICROCAPSULES DE RESINES DE MELAMINE-FORMALDEHYDE, PRESENTANT UNE FAIBLE VISCOSITE ET UNE FAIBLE TENEUR EN FORMALDEHYDE

(30) Priorität: 10.01.2000 DE 10000621
(43) Veröffentlichungstag der Anmeldung: 09.10.2002
(73) Patentinhaber: BASF AKTIENGESELLSCHAFT, 67056 Ludwigshafen (DE)
(72) Erfinder: HOFFMANN, Dietrich, 67127 Rödersheim-Gronau (DE); EISERMANN, Herbert, 68229 Mannheim (DE)
(74) Vertreter: Kinzebach, Werner, Dr.
(86) Internationale Anmeldenummer: PCT/EP2001/000167
(87) Internationale Veröffentlichungsnummer: WO 2001/051197

(56) Entgegenhaltungen:
- EP-A- 0 026 914

## Beschreibung

Die Erfindung betrifft ein Verfahren zur Herstellung einer Dispersion von Mikrokapseln durch Kondensation von teilmethyliertem Melamin-Formaldehyd-Harz in Wasser, in dem das im Wesentlichen wasserunlösliche, den Kapselkern bildende Material dispergiert ist, in Gegenwart eines anionischen Schutzkolloids. Die Erfindung betrifft außerdem die nach diesem Verfahren erhaltenen Dispersionen von Mikrokapseln und deren Verwendung zur Herstellung von Druckfarben und Papierbeschichtungsmassen.

Mikrodisperse Teilchen, die Durchmesser im Bereich von etwa 0,1 bis 100 µm aufweisen können, haben breite Anwendung in verschiedenen Bereichen gefunden. Beispielsweise werden sie als Vollkugeln in Polier- und/oder Reinigungsmitteln, als Abstandshalter in Druckfarben, als Maßgröße für medizinisch-mikroskopische Untersuchungen usw. verwendet. Neben den Vollkugeln sind Mikrokapseln bekannt, die als Kernmaterial flüssige, feste oder gasförmige, in Wasser unlösliche oder im Wesentlichen unlösliche Stoffe enthalten können. Als Material für die Kapselwände sind beispielsweise Melamin-Formaldehyd-Polymere, Polyurethan, Gelatine, Polyamide oder Polyharnstoffe gebräuchlich. Weit verbreitet ist die Verwendung ölgefüllter Mikrokapseln zur Herstellung selbstdurchschreibender Papiere.

Die ölgefüllten Mikrokapseln werden dazu in Papierbeschichtungsmassen eingearbeitet, mit denen Papiersubstrate beschichtet werden. Die gegenwärtig üblichen hohen Beschichtungsgeschwindigkeiten erfordern eine niedrige Viskosität der Papierbeschichtungsmassen, was wiederum eine geringe Viskosität der Mikrokapseldispersionen erfordert. Dennoch sollte die Kapselkonzentration der Dispersionen möglichst hoch sein, um ein unnötig nasses Arbeiten zu vermeiden. Zur Erzielung einer guten Farbstärkeausbeute wird ferner eine möglichst enge Kapselgrößenverteilung angestrebt.

Dispersionen von Mikrokapseln aus Aminoplastharzen, wie Melamin-Formaldehyd-Harzen, enthalten herstellungsbedingt mehr oder weniger freien Formaldehyd. Es ist aus umwelt- und arbeitshygienischen Gründen anzustreben, den Formaldehydgehalt so niedrig wie möglich zu halten, ohne jedoch andere Eigenschaften der Mikrokapseldispersionen ungünstig zu beeinflussen. Dabei ist zwischen dem Formaldehyd-Gehalt der Dispersion selbst und dem Formaldehyd-Gehalt des mit der Dispersion beschichteten Materials zu unterscheiden. Eine geringe Konzentration an freiem Formaldehyd in der wässrigen Kapseldispersion bedeutet nicht notwendigerweise, dass auch eine Bestimmung des Formaldehyd-Gehalts in dem beschichteten Material, z. B. mittels des sogenannten Kaltwasserauszugs nach DIN EN 645 und DIN EN 1541, niedrige Formaldehydwerte ergibt.

Zur Verringerung des Formaldehyd-Gehalts ist es üblich, Mikrokapseldispersionen auf der Basis von Melamin-Formaldehyd-Harzen Formaldehydfänger zuzusetzen. Zu den am häufigsten verwendeten Formaldehydfängern gehören Ammoniak, Harnstoff, Ethylenharnstoff und Melamin, die den Restgehalt an Formaldehyd in der Kapseldispersion mehr oder minder wirksam reduzieren.

Aus EP-A-0 383 358 und DE-A-38 14 250 sind lichtempfindliche Materialien bekannt, die aus Mikrokapseln bestehen, deren Wände aus Melamin-Formaldehyd-Harzen gebildet werden. Zur Entfernung überschüssigen Formaldehyds wird bei der Härtung Harnstoff zugesetzt.

Bei den in der EP-A-319 337 und US-A-4,918,317 beschriebenen Verfahren wird Harnstoff gegen Ende der Härtung zugesetzt.

Die EP-A-0 415 273 beschreibt die Herstellung und Verwendung mono- und polydisperser Vollkugelteilchen aus Melamin-Formaldehyd-Kondensat. Zur Bindung des bei der Kondensation freiwerdenden Formaldehyds wird die Verwendung von Ammoniak, Harnstoff oder Ethylenharnstoff vorgeschlagen.

Mikrokapseln aus Melamin-Formaldehyd-Harzen, die sich durch ihre gleichmäßige Kapselgröße und Dichtigkeit auszeichnen, sind aus der EP-A-0 218 887 und der EP-A-0 026 914 bekannt. Diese Kapseldispersionen enthalten jedoch noch restlichen freien Formaldehyd, dessen Anwesenheit bei der Weiterverarbeitung unerwünscht ist. Die EP-A-0 026 914 empfiehlt daher, den Formaldehyd im Anschluss an die Härtung mit Ethylenharnstoff und/oder Melamin als Formaldehydfänger zu binden.

Aus DE 198 35 114 sind Dispersionen von Mikrokapseln auf der Basis von Melamin-Formaldehyd-Harz bekannt, wobei das Melamin-Formaldehyd-Harz teilweise verethert ist und ein wasserlösliches primäres, sekundäres oder tertiäres Amin oder Ammoniak enthält. Vor der Härtung wird als Formaldehydfänger Harnstoff zugesetzt.

Die DE 198 33 347 beschreibt ein Verfahren zur Herstellung von Mikrokapseln durch Kondensation von Melamin-Formaldehyd-Harzen und/oder deren Methylethern, wobei vor der Härtung Harnstoff oder Harnstoff, dessen Aminogruppen mit einer Ethylen- oder Propylenbrücke verbunden sind, als Formaldehydfänger zugesetzt wird. Die erhaltenen Dispersionen sind zwar formaldehydarm, durch den Zusatz von Harnstoff vor der Härtung werden jedoch die Stabilität der Mikrokapseln und die Viskosität der Mikrokapseldispersion ungünstig beeinflusst.

Durch den Zusatz der genannten Formaldehydfänger zur fertigen Mikrokapseldispersion bzw. bei der Herstellung der Mikrokapseldispersion wird zwar regelmäßig der Formaldehydgehalt der Dispersion gesenkt. Der Formaldehydgehalt von Papieren, die mit die Mikrokapseldispersionen enthaltenden Beschichtungsmassen beschichtet sind, der durch den Kaltwasserauszug ermittelbar ist, lässt sich allerdings auch bei Zugabe großer Mengen an Formaldehydfänger nicht unterhalb eine bestimmte Grenze senken.

Aufgabe der vorliegenden Erfindung ist es, ein Verfahren zur Herstellung einer formaldehydreduzierten Dispersion von Mikrokapseln bereitzustellen, wobei der mittels Kaltwasserauszug feststellbare Formaldehyd-Gehalt von mit der Dispersion beschichteten Papieren möglichst gering ist. Eine weitere Aufgabe besteht in der Bereitstellung niedrigviskoser Mikrokapseldispersionen, insbesondere niedrigviskoser Mikrokapseldispersionen mit hohem Feststoffgehalt.

Diese Aufgaben werden gelöst durch das erfindungsgemäße Verfahren zur Herstellung einer Dispersion von Mikrokapseln durch Kondensation eines teilmethylierten Melamin-Formaldehyd-Harzes mit einem Molverhältnis von Melamin:Formaldehyd:Methanol von 1:3,0:2,0 bis 1:6,0:4,0 in Wasser, in dem das im Wesentlichen wasserunlösliche, den Kapselkern bildende Material dispergiert ist, in Gegenwart eines Alkalimetallsalzes eines Homo- oder Copolymers von 2-Acrylamido-2-methylpropansulfonsäure als Schutzkolloid bei pH-Werten von 3 bis 6,5 durch Präformierung der Mikrokapseln bei einer Temperatur von 20 bis 50 °C und anschließende Härtung der Kapselwand bei > 50 bis 100 °C, das dadurch gekennzeichnet ist, dass man während der Härtung portionsweise oder kontinuierlich 5 bis 100 Gew.-% Melamin, bezogen auf das Melamin-Formaldehyd-Harz, zusetzt.

Man nimmt an, dass bei den bekannten Verfahren zur Senkung des Formaldehydgehalts durch Zusatz von Formaldehydfängern, wie Ammoniak, Aminen etc., der bei der Kondensation freiwerdende Formaldehyd durch Bildung eines Adduktes aus Formaldehyd und Formaldehydfänger gebunden wird. Dieses Addukt wird jedoch beim Beschichten von Papiersubstraten oder beim Trocknen der beschichteten Papiere offenbar unter der Einwirkung saurer Gruppen, z. B. von Sulfonsäuregruppen von überschüssigem Schutzkolloid, das nicht in die Kapselwand eingebaut worden ist, zurückgespalten, so dass im Kaltwasserauszug der beschichteten Papiere nach wie vor Formaldehyd feststellbar ist. Beim erfindungsgemäßen Verfahren erfolgt eine irreversible Bindung des freiwerdenden Formaldehyds, überschüssigen Schutzkolloids und des zugesetzten Melamins, wobei sich das gebildete Produkt vermutlich auf den Kapselwänden ablagert. Neben einer Senkung des durch Kaltwasserauszug feststellbaren Formaldehydgehalts wird damit auch eine Erniedrigung der Viskosität der Mikrokapseldispersion erreicht, denn das überschüssige Schutzkolloid, das nun nicht mehr in gelöster Form in der wässrigen Phase, sondern in chemisch gebundener Form auf der Kapselwand vorliegt, leistet keinen Beitrag zur Viskosität der Dispersion. Die erfindungsgemäß hergestellten Dispersionen können daher auch vorteilhaft sprühgetrocknet werden, denn die Mikrokapseln zeigen untereinander im Wesentlichen keine "Klebrigkeit".

Das Verfahren gemäß der Erfindung wird im Allgemeinen so durchgeführt, dass man das einzukapselnde Kernmaterial, das teilmethylierte Melamin-Formaldehyd-Harz mit einem definierten Molverhältnis von Melamin:Formaldehyd:Methanol von 1:3,0:2,0 bis 1:6,0:4,0, bevorzugt 1:3,5:2,2 bis 1:4,5:2,8 und insbesondere etwa 1:3,9:2,4, das Schutzkolloid und Wasser zu einer Vormischung vereinigt, die Vormischung mit einer Säure, vorzugsweise Ameisensäure, auf einen pH-Wert von 3 bis 6,5 einstellt und die Vormischung zur Dispergierung des Kernmaterials scherenden Bedingungen aussetzt. Bei einer Temperatur im Bereich von 20 bis 50 °C, bevorzugt etwa 35 °C, präformieren sich die Mikrokapseln, d. h. es bildet sich um die dispergierten Tröpfchen des Kernmaterials eine Wand von weitgehend unvernetztem Melamin-Formaldehyd-Harz. Anschließend wird die Temperatur erhöht, um die Kapselwand der Mikrokapseln durch Ausbildung von Vernetzungen zu härten. Die Aushärtung der Kapselwand kann bereits oberhalb von 50 °C beobachtet werden; bevorzugt werden jedoch 65 °C und insbesondere bevorzugt 75 °C als untere Grenze des Temperaturbereichs zum Aushärten gewählt. Da es sich um eine wässrige Dispersion handelt, soll die Härtung bei Temperaturen unterhalb von 100 °C, bevorzugt unterhalb von 95 °C und besonders bevorzugt unterhalb von 80 °C als oberer Temperaturgrenze durchgeführt werden. Je nach pH-Wert der Dispersion erfolgt die Härtung unterschiedlich rasch, wobei Dispersionen bei niedrigeren pH-Werten zwischen 3 und 5 besonders gut aushärten. Oberhalb von 50 °C ist jedoch auch im schwach sauren bis neutralen pH-Bereich die Härtung deutlich zu beobachten.

Die optimalen Temperaturen für die beiden Schritte Kapsel-Präformierung und -Härtung, können in Abhängigkeit vom jeweiligen pH-Wert durch einfache Reihenversuche leicht ermittelt werden.

Das Erwärmen der Kapseldispersion auf die Härtungstemperatur kann auf verschiedene Weise erfolgen. In einer bevorzugten Ausführungsform wird heißer Wasserdampf in die Kapseldispersion injiziert. Die Temperatur des Wasserdampfs beträgt z. B. 105 bis 120 °C und der Druck 1,5 bis 3 bar. Es ist dabei zu berücksichtigen, dass durch das Kondensat der Feststoffgehalt der Dispersion etwas erniedrigt wird.

Nach Erreichen der Härtungstemperatur wird beim erfindungsgemäßen Verfahren während der Härtung portionsweise oder kontinuierlich Melamin, d. h. Cyanursäuretriamid, zur Mikrokapseldispersion gegeben, wobei eine kontinuierliche Zugabe bevorzugt ist. Die zugegebene Menge an Melamin beträgt 5 bis 100 Gew.-%, vorzugsweise 7 bis 40 Gew.-%, insbesondere 12,5 bis 35 Gew.-%, bezogen auf das Melamin-Formaldehyd-Harz. Eine besonders bevorzugte Art der Zugabe besteht darin, nach Erreichen der Härtungstemperatur einen Zulauf einer Melamin-Aufschlämmung zur Dispersion der präformierten Mikrokapseln mit zeitlich im Wesentlichen konstantem Massenfluss zu starten. Der Massenfluss ist vorzugsweise so gewählt, dass sich die Zugabe über wenigstens 50 %, insbesondere wenigstens 65 % der Härtungsdauer erstreckt. Die Härtungsdauer beträgt im Allgemeinen 0,5 bis 10 Stunden, typischerweise 1 bis 3 Stunden.

Das Melamin wird zweckmäßigerweise in Form einer wässrigen Aufschlämmung, deren pH vorzugsweise mit einer Säure, z. B. mit Ameisensäure, auf 3,8 bis 5,0, vorzugsweise etwa 4,5, eingestellt ist und die z. B. einen Trockengehalt von 15 bis 80 Gew.-%, vorzugsweise 25 bis 70 Gew.-%, aufweist, zugegeben. Die mittlere Teilchengröße der Melaminteilchen in der Aufschlämmung beträgt vorzugsweise 1 bis 50 µm, insbesondere etwa 1 bis 5 µm. Die mittlere Teilchengröße kann geeigneterweise mit einem Malvern Sizer ermittelt werden.

Es wurde ferner gefunden, dass die Mitverwendung von Harnstoff eine synergistische Wirkung auf die Senkung des mittels Kaltwasserauszugs feststellbaren Formaldehydgehalt hat. Das erfindungsgemäße Verfahren kann daher mit Vorteil so durchgeführt werden, dass man während der Härtung ein Gemisch von Melamin und Harnstoff, z. B. mit einem Gewichtsverhältnis von 20:1 bis 1:20, vorzugsweise 5:1 bis 1:1 zusetzt, zweckmäßigerweise in Form einer wässrigen Melamin-Aufschlämmung, die den Harnstoff gelöst enthält.

Als Ausgangsstoffe für das Wandmaterial setzt man teilmethylierte Melamin-Formaldehyd-Harze, d. h. partielle Methylether von Melamin-Formaldehyd-Harzen mit einem Molverhältnis von Melamin:Formaldehyd:Methanol von 1:3,0:2,0 bis 1:6,0:4,0, bevorzugt 1:3,5:2,2 bis 1:4,5:2,8, insbesondere etwa 1:3,9:2,4, ein. Die Methylether werden z. B. in analoger Weise hergestellt, wie es in der DE 198 35 114 angegeben ist, wobei als Alkohol Methanol verwendet wird und ohne Melaminderivat-Zusatz gearbeitet wird. Die Molverhältnisse von Melamin:Formaldehyd:Methanol des zur Kapselherstellung verwendeten Melamin-Formaldehyd-Harzes haben einen entscheidenden Einfluss auf die resultierende Viskosität der Kapseldispersion. Bei den angegebenen Molverhältnissen erhält man die günstigste Kombination von Feststoffgehalt und Viskosität der Mikrokapseldispersionen.

Als Kernmaterial für die Mikrokapseln kommen flüssige, feste oder gasförmige, in Wasser unlösliche bis im Wesentlichen unlösliche Stoffe in Betracht. Z. B. sind zu nennen: Flüssigkeiten, wie Alkylnaphthaline, partiell hydrierte Terphenyle, aromatische Kohlenwasserstoffe, wie Xylol, Töluol, Dodecylbenzol, aliphatische Kohlenwasserstoffe, wie Benzin und Mineralöl, Paraffine, Chlorparaffine, Wachse unterschiedlicher chemischer Konstitution, Fluorkohlenwasserstoffe, natürliche Öle, wie Erdnussöl, Sojaöl, außerdem Klebstoffe, Aromastoffe, Parfumöle, Monomere, wie Acryl- oder Methacrylsäureester, Styrol, Wirkstoffe, wie Pflanzenschutzmittel, roter Phosphor, anorganische und organische Pigmente, z. B. Eisenoxidpigmente; außerdem Lösungen oder Suspensionen von Farbstoffen und vor allem von Farbbildnern und Pigmenten in Kohlenwasserstoffen, wie Alkylnaphthalinen, partiell hydriertem Terphenyl, Dodecylbenzol und anderen hochsiedenden Flüssigkeiten. Geeignete Farbbildner sind in den eingangs genannten Druckschriften beschrieben.

Die Dispergierung des Kernmaterials erfolgt je nach der Größe der herzustellenden Kapseln in bekannter Weise, wie es beispielsweise in der EP-A-0 026 914 beschrieben ist. Kleine Kapseln, insbesondere wenn die Größe unterhalb von 50 µm liegen soll, erfordern Homogenisier- oder Dispergiermaschinen, wobei diese Geräte mit oder ohne Zwangsdurchlaufvorrichtung verwendet werden können. Es ist wesentlich, dass die Homogenisier- oder Dispergiermaschinen zu Beginn der Präformierungsphase eingesetzt werden. Während der Härtungsphase wird die Dispersion lediglich zur gleichmäßigen Durchmischung unter niedrigscherenden Bedingungen durchmischt oder umgewälzt.

Als Schutzkolloid wird ein Alkalimetallsalz eines Homo- oder Copolymers von 2-Acrylamido-2-methylpropansulfonsäure verwendet, bevorzugt das Natriumsalz. Als Comonomere sind Acrylsäure, Methacrylsäure, C₁₋₃-Alkyl(meth)acrylate, Hydroxy-C₂₋₄-(meth)acrylate und/oder N-Vinylpyrrolidon geeignet. Das Copolymer enthält vorzugsweise wenigstens 40 Gew.-% 2-Acrylamido-2-methylpropansulfonsäure-Einheiten. Geeignete Homo- und Copolymere sind in der EP-A-0 562 344 beschrieben. Das Schutzkolloid hat vorzugsweise einen K-Wert nach Fikentscher von 100 bis 170 oder eine Viskosität von 200 bis 5000 mPas (gemessen in 20 gew.-%iger wässriger Lösung bei 23 °C in einem Brookfield-Gerät RVT Spindel 3, bei 50 Upm). Besonders bevorzugt sind Polymere mit einem K-Wert von 115 bis 150 bzw. solche, deren Viskosität 400 bis 4000 mPas beträgt.

Das Gewichtsverhältnis von Melamin-Formaldehyd-Harz zu Schutzkolloid beträgt vorzugsweise 3:1 bis 4,5:1, insbesondere 3,5:1 bis 4,0:1. Das Verhältnis von Harz zu Schutzkolloid und die Art des Schutzkolloids beeinflussen die Kapselgröße und die Kapselgrößenverteilung.

Die erfindungsgemäße hergestellten Mikrokapseldispersionen weisen eine wünschenswert niedrige Viskosität auf, so dass auch Mikrokapseldispersionen mit hohem Feststoffgehalt mit vorteilhaften Weiterverarbeitungseigenschaften hergestellt werden können. Die erhaltenen Mikrokapseldispersionen weisen im Allgemeinen einen Feststoffgehalt von 15 bis 60 Gew.-%, vorzugsweise jedoch von wenigstens 45 Gew.-%, insbesondere wenigstens 48 Gew.-%, und besonders bevorzugt 50 bis 53 Gew.-%, auf. Die Viskosität der Mikrokapseldispersionen (gemessen bei 23 °C in einem Brookfield-Gerät RVT Spindel 3, bei 50 Upm) beträgt im Allgemeinen weniger als 100 mPas, insbesondere weniger als 90 mPas.

Zur Herstellung von Mikrokapseldispersionen mit hohem Feststoffgehalt geht man zweckmäßigerweise so vor, dass man eine Vormischung aus Melamin-Formaldehyd-Harz, Schutzkolloid und dem den Kapselkern bildenden Material herstellt, die einen Feststoffgehalt von wenigstens 50 Gew.-%, vorzugsweise etwa 55 Gew.-% aufweist, bei 20 bis 50 °C die Präformierung der Mikrokapseln bewirkt und die Dispersion zur Härtung durch Injektion von heißem Wasserdampf auf die Härtungstemperatur erwärmt, wobei der Feststoffgehalt der Dispersion durch das Dampfkondensat auf den gewünschten Wert, z. B. etwa 50 Gew.-%, abgesenkt wird.

Mit dem erfindungsgemäßen Verfahren sind Dispersionen von Mikrokapseln mit vorteilhaft enger Kapselgrößenverteilung erhältlich, die z. B. durch einen Quotienten (d₉₀-d₁₀)/d₅₀ (Span) von 0,3 bis 0,8, vorzugsweise 0,3 bis 0,5, gekennzeichnet ist. Die d₁₀-, d₅₀und d₉₀-Werte geben Grenzwerte an, bezüglich derer 10 %, 50 % bzw. 90 % der Kapseln einen Kapseldurchmesser aufweisen, der kleiner oder gleich dem Grenzwert ist. Die d₁₀-, d₅₀- und d₉₀-Werte können geeigneterweise mit einem Malvern Sizer ermittelt werden. Überraschenderweise werden - entgegen der Erwartung des Fachmanns - auch dann Mikrokapseldispersionen mit wünschenswert enger Größenverteilung erhalten, wenn man von Vormischungen mit hohem Feststoffgehalt, z. B. mehr als 50 Gew.-%, ausgeht. Die Mikrokapseln weisen im Allgemeinen einen mittleren Durchmesser (d₅₀) im Bereich von 1 bis 50 µm, insbesondere 3 bis 8 µm auf.

Bevorzug wird eine Dispersion von Mikrokapseln mit einem Kern aus einem im Wesentlichen wasserunlöslichen Material und einer Kapselwand aus einem kondensierten Melamin-Formaldehydharz, wobei der d₅₀-Wert des Durchmessers der Mikrokapseln im Bereich von 3 bis 8 µm, der Quotient (d₉₀-d₁₀)/d₅₀ im Bereich von 0,3 bis 0,8 liegt, der Feststoffgehalt der Dispersion wenigstens 45 Gew.-% und die Brookfield-Viskosität der Dispersion bei 23 °C und 50 Upm weniger als 100 mPas beträgt.

Die nachfolgenden Beispiele sollen das erfindungsgemäße Verfahren näher erläutern. Die in den Beispielen angegebenen Teile und Prozente sind, sowie nicht anders angegeben, Gewichtsteile und Gewichtsprozente.

### Beispiele

### Verwendete Messmethoden

### 1. Feststoffgehalt

Der in den Beispielen angegebene Feststoffgehalt wird durch Trocknung (4 Std. bei 105 °C) bestimmt und setzt sich im Wesentlichen aus den Mikrokapseln und dem wasserlöslichen Polymeren zusammen. Die Kapseldurchmesser wurden subjektiv unter dem Mikroskop, objektiv mit einem Malvern Sizer bestimmt. Angegeben werden die Kapseldurchmesser in µm als d₅₀-Wert.

### 2. Viskosität

Die Viskosität der Kapseldispersionen sowie die Viskosität der 20 %igen Lösungen der wasserlöslichen Schutzkolloide wurde bei 23 °C mit einem Brookfield-Gerät RVT mit Spindel 3 bei 50 Upm gemessen. Der K-Wert wurde nach Fikentscher (Cellulosechemie 13 (1932) 58 ff), 0,5 %ig in Wasser, bestimmt.

### 3. Messungen der Formaldehydkonzentration im Papier nach DIN EN 645 und DIN EN 1541

Ein mit einer Streichfarbe, die durch gründliches Homogenisieren von 8,75 g Wasser, 8,25 g Mikrokapseldispersion, 1,30 g eines Celluloseschliffs als Abstandshalter (Arbocel® BSM 55) und 1,30 g einer 50 gew.-%igen handelsüblichen Bindemitteldispersion auf Basis eines Copolymerisats aus Styrol und Butylacrylat (Acronal® S 320 D) erhalten wurde, beschichtetes Papier (etwa 4,6 g/m²) wurde gemäß DIN EN 645 zerkleinert und ein Kaltwasserauszug gemacht. Der Formaldehyd im Filtrat wurde nach DIN 1541 mit Acetylaceton photometrisch bestimmt.

### Beispiele

### Beispiel 1

Es wurden in einem zylindrisch geformten 2 1-Rührgefäß mit einem eingebauten stufenlos regelbaren Dispergator mit einer handelsüblichen Dispergierscheibe mit einem Durchmesser von 50 mm nacheinander 400 g einer 5 %igen Lösung eines Fluoran-Reaktfarbstoffgemisches (bestehend aus 5 Teilen Pergascript® I-2RN, 20 Teilen Pergascript® I-2GN, 8 Teilen Pergascript® I-G, 67 Teilen Pergascript® I-R, Fa. CIBA) in einer Mischung von Diisopropylnaphthalin und linearem Alkan (Siedepunkt 220 °C) im Verhältnis 80:20, 69 g einer 70 %igen Lösung eines methylierten Melaminformaldehydharzes (Molverhältnis Melamin:Formaldehyd:Methanol 1:3,9;2,4), 64 g einer 20 %igen Lösung von Poly-2-acrylamido-2-methylpropansulfonsäure/Natriumsalz (K-Wert 123; Viskosität von 770 mPas Brookfield), 350 g Leitungswasser und 15 g 10 %ige Ameisensäure gegeben und zu einer Kapseldispersion verarbeitet, indem man die Rührgeschwindigkeit auf eine Umfangsgeschwindigkeit auf etwa 20 m/s einstellte. Die Temperatur wurde bei etwa 35 °C gehalten. Nach 60 Minuten Dispergierung war die Dispersion ölfrei; es hatte sich eine Teilchengröße von etwa 5 µm eingestellt. Die Rührgeschwindigkeit der Dispergierscheibe wurde dann auf einen Wert reduziert, der zur gleichmäßigen Umwälzung des Gefäßinhalts ausreichte. Nach Einstellen der Härtetemperatur von 75 °C durch Heißdampfinjektion wurde ein Zulauf einer 27 %igen ameisensauren Melamin-Aufschlämmung mit pH 4,5 gestartet und im Verlauf einer Stunde zudosiert; es wurden insgesamt 67 g der Aufschlämmung zudosiert. Es folgt eine Härtephase von 120 Minuten. Nach Abkühlen der Dispersion auf etwa 55 °C wurde mit Diethanolamin neutralisiert und mit Ammoniak ein pH-Wert von 9,5 eingestellt.

Man erhielt eine gleichmäßige Kapseldispersion mit 50 % Feststoffgehalt und einer Viskosität von 83 mPas. Die Analyse des Formaldehydgehalts im Kaltwasserauszug ergab einen Wert von 130 ppm. Die Kapselgrößenverteilung wies einen Span von 0,43 auf.

### Beispiel 2

Es wurde wie in Beispiel 1 verfahren, jedoch enthielt die Melamin-Aufschlämmung außerdem 9 g gelösten Harnstoff. Die Kapseln wurden bei 90 °C gehärtet.

Die Kapselgrößenverteilung der erhaltenen Dispersion wies einen Span von 0,36 auf, die Viskosität betrug 83 mPas und der Feststoffgehalt betrug 50 %. Der Formaldehydgehalt im Kaltwasserauszug betrug 80 ppm.

Die Verarbeitungs- und Durchschreibeeigenschaften der Kapseldispersion von Beispiel 1 und 2 erfüllen die modernen Anforderungen.

### Vergleichsbeispiel 1

In einem zylindrisch geformten 2 1-Rührgefäß mit einem eingebauten stufenlos regelbaren Dispergator mit einer handelsüblichen Dispergierscheibe mit einem Durchmesser von 50 mm wurden 286 g Leitungswasser vorgelegt und mit 86 g einer 70 %igen Lösung eines Melaminformaldehydharzes (Molverhältnis Melamin:Formaldehyd:Methanol 1:3,9:2,4) einer Viskosität von 275 mPas (DIN 51562) und einem pH-Wert von 8,5 vermischt. Zu dieser Vorlage wurden 80 g einer 20 %igen Lösung von Poly-2-acrylamido-2-methylpropansulfonsäure/Natriumsalz (Viskosität 770 mPas, K-Wert 123) gegeben und vermischt. Es wurde dann eine Reaktfarbstofflösung von 5 % Farbbildner gemäß Beispiel 1 in einer Mischung von Diisopropylnaphthalin und linearem Alkan (Siedepunkt 220 °C) im Verhältnis 80:20 hinzugegeben. Man säuerte mit 15 ml 10 %iger Ameisensäure an und stellte die Rührgeschwindigkeit auf eine Umfangsgeschwindigkeit auf etwa 20 m/s ein. Die Temperatur wurde bei etwa 35 °C gehalten. Nach 60 Minuten Dispergierung war die Dispersion ölfrei; es hatte sich eine Teilchengröße von etwa 5 µm eingestellt. Die Rührgeschwindigkeit der Dispergierscheibe wurde dann auf einen Wert reduziert, der zur gleichmäßigen Umwälzung des Gefäßinhalts ausreichte. Anschießend wurde die Temperatur der Dispersion durch Heißdampfinjektion innerhalb von 30 Minuten auf 75 °C erhöht. Es folgte eine Härtephase von 120 Minuten. Nach Abkühlen der Dispersion auf etwa 55 °C wurde mit Diethanolamin neutralisiert und mit Ammoniak ein pH-Wert von 9,5 eingestellt.

Die Viskosität dieser Dispersion betrug etwa 120 mPas Brookfield, der Feststoffgehalt 40 %, und der Formaldehydgehalt im Kaltwasserauszug betrug etwa 360 ppm.

### Vergleichsbeispiel 2

Der nach Vergleichsbeispiel 1 hergestellte Mikrokapseldispersion wurden nach der Härtung und nach dem Neutralisieren mit Diethanolamin anstelle des Ammoniaks 10 g Harnstoff zugesetzt. Die Viskosität betrug etwa 120 mPas Brookfield und der Formaldehyd im Kaltwasserauszug betrug etwa 260 ppm.

### Vergleichsbeispiel 3

Vergleichsbeispiel 2 wurde wiederholt, wobei jedoch der Harnstoff bereits zu Beginn der Dispergierphase zugesetzt wurde.

Der Formaldehydgehalt im Kaltwasserauszug lag bei etwa 80 ppm, jedoch betrug die Viskosität etwa 350 mPas und die Mikrokapseln waren von geringer Intensität und Stabilität.

### Vergleichsbeispiel 4

Vergleichsbeispiel 1 wurde wiederholt, wobei man jedoch nach dem Erreichen der Härtungstemperatur 18,1 g Melamin, welches als 27 %ige Schlämme zubereitet und mit Ameisensäure auf pH 4,5 angesäuert wurde, auf einmal zu der Kapseldispersion gab. Die Dispersion dickte augenblicklich ein. Es bildeten sich Flocken, die Dispersion gerann. Die Durchschreibefähigkeit verbliebener Kapselreste war stark vermindert.

### Vergleichsbeispiel 5

Vergleichsbeispiel 1 wurde wiederholt, wobei jedoch ein teilmethyliertes Melaminformaldehyd-Harz mit einem Molverhältnis Melamin:Formaldehyd:Methanol von 1:5,3:3,4 verwendet wurde. Man stellte in der Aufheizphase einen deutlichen Anstieg der Viskosität fest. Die Endviskosität lag bei 150 mPas Brookfield und der Formaldehydgehalt bei 260 ppm im Kaltwasserauszug.

Wie aus den Beispielen ersichtlich ist, werden bei Verwendung von Ammoniak oder Harnstoff als Formaldehydfänger (vergleiche Vergleichsbeispiele 1 und 2) Dispersionen mit mäßig guter Viskosität und hohem Gehalt an Formaldehyd im Kaltwasserauszug erhalten. Die Zugabe von Harnstoff gleich zu Beginn der Dispergierphase (Vergleichsbeispiel 3) verringert zwar den Formaldehydgehalt, erhöht aber die Viskosität drastisch. Die Verwendung eines teilmethylierten Melamin-Formaldehyd-Harzes mit einem bestimmten Molverhältnis von Melamin:Formaldehyd:Methanol, zu dem man während der Härtung eine ameisensaure Melamin-Aufschlämmung zulaufen lässt (Beispiel 1) führt zu einer Dispersion mit einem hohen Feststoffgehalt, geringer Viskosität und akzeptablem Formaldehydgehalt im Kaltwasserauszug. Dasselbe Melamin-Formaldehyd-Harz liefert bei Zugabe einer ameisensauren Mischung von Melamin und Harnstoff während der Härtung (Beispiel 2) eine Dispersion mit einem Feststoffgehalt von 50 %, einer sehr niedrigen Viskosität und einem geringen Formaldehydgehalt im Kaltwasserauszug.

## Patentansprüche

1. Verfahren zur Herstellung einer Dispersion von Mikrokapseln durch Kondensation eines teilmethylierten Melamin-Formaldehyd-Harzes mit einem Molverhältnis von Melamin:Formaldehyd:Methanol von 1:3,0:2,0 bis 1:6,0:4,0 in Wasser, in dem das im Wesentlichen wasserunlösliche, den Kapselkern bildende Material dispergiert ist, in Gegenwart eines Alkalimetallsalzes eines Homo- oder Copolymers von 2-Acrylamido-2-methylpropansulfonsäure bei pH-Werten von 3 bis 6,5 durch Präformierung der Mikrokapseln bei einer Temperatur von 20 bis 50 °C und anschließende Härtung der Kapselwand der präformierten Mikrokapseln bei > 50 bis 100 °C, **dadurch gekennzeichnet, dass** man während der Härtung portionsweise oder kontinuierlich 5 bis 100 Gew.-% Melamin, bezogen auf das Melamin-Formaldehyd-Harz, zusetzt.

2. Verfahren nach Anspruch 1, **dadurch gekennzeichnet, dass** man nach Erreichen der Härtungstemperatur einen Zulauf einer Melamin-Aufschlämmung mit zeitlich im Wesentlichen konstantem Massenfluss startet.

3. Verfahren nach Anspruch 1 oder 2, **dadurch gekennzeichnet, dass** man während der Härtung ein Gemisch von Melamin und Harnstoff mit einem Melamin/Harnstoff-Gewichtsverhältnis von 1:20 bis 20:1 zusetzt.

4. Verfahren nach einem der vorhergehenden Ansprüche, **dadurch gekennzeichnet, dass** das Gewichtsverhältnis von teilmethyliertem Melamin-Formaldehyd-Harz zu Alkalimetallsalz des Homo- oder Copolymers von 2-Acrylamido-2-methylpropansulfonsäure 3:1 bis 4,5:1 beträgt.

5. Verfahren nach einem der vorhergehenden Ansprüche, **dadurch gekennzeichnet, dass** man die Mikrokapseldispersion durch Injektion von Wasserdampf in die Mikrokapseldispersion auf Härtungstemperatur erwärmt.

6. Verfahren nach einem der vorhergehenden Ansprüche, **dadurch gekennzeichnet, dass** die erhaltene Mikrokapseldispersion einen Feststoffgehalt von wenigstens 45 Gew.-% aufweist.

7. Dispersion von Mikrokapseln, erhältlich nach dem Verfahren nach einem der Ansprüche 1 bis 6.

8. Dispersion von Mikrokapseln mit einem Kern aus einem im Wesentlichen wasserunlöslichen Material und einer Kapselwand aus einem kondensierten Melamin-Formaldehydharz, wobei der d₅₀-Wert des Durchmessers der Mikrokapseln im Bereich von 3 bis 8 µm, der Quotient (d₉₀-d₁₀)/d₅₀ im Bereich von 0,3 bis 0,8 liegt, der Feststoffgehalt der Dispersion wenigstens 48 Gew.-% und die Brookfield-Viskosität der Dispersion bei 23 °C und 50 Upm weniger als 100 mPas beträgt.

9. Verwendung der Dispersion von Mikrokapseln nach Anspruch 7 oder 8 zur Herstellung von Druckfarben oder Papierbeschichtungsmassen.

## Claims

1. A process for preparing a dispersion of microcapsules by condensing a partially methylated melamine-formaldehyde resin having a molar ratio of melamine:formaldehyde:methanol of from 1:3.0:2.0 to 1:6.0:4.0 in water in which the essentially water-insoluble material forming the capsule core is present in dispersion in the presence of an alkali metal salt of a homopolymer or copolymer of 2-acrylamido-2-methylpropanesulfonic acid as protective colloid at a pH of from 3 to 6.5 by preforming the microcapsules at a temperature of from 20 to 50°C and then curing the capsule wall of the preformed microcapsules at > 50 to 100°C, which comprises adding from 5 to 100% by weight of melamine, based on the melamine-formaldehyde resin, in portions or continuously in the course of curing.

2. A process as claimed in claim 1, wherein a feed of a melamine suspension is started, with an essentially constant mass flow rate, after the curing temperature has been reached.

3. A process as claimed in claim 1 or 2, wherein a mixture of melamine and urea with a melamine/urea weight ratio of from 1:20 to 20:1 is added in the course of curing.

4. A process as claimed in any of the preceding claims, wherein the weight ratio of partially methylated melamine-formaldehyde resin to alkali metal salt of the homopolymer or copolymer of 2-acrylamido-2-methylpropanesulfonic acid is from 3:1 to 4.5:1.

5. A process as claimed in any of the preceding claims, wherein the microcapsule dispersion is heated to curing temperature by injecting steam into the microcapsule dispersion.

6. A process as claimed in any of the preceding claims, wherein the resulting microcapsule dispersion has a solids content of at least 45% by weight.

7. A dispersion of microcapsules obtainable by a process as claimed in any of claims 1 to 6.

8. A dispersion of microcapsules having a core comprising essentially water-insoluble material and a capsule wall comprising a condensed melamine-formaldehyde resin, the d₅₀ value of the diameter of the microcapsules being in the range from 3 to 8 µm, the quotient (d₉₀-d₁₀)/d₅₀ being in the range from 0.3 to 0.8, the solids content of the dispersion being at least 45% by weight, and the Brookfield viscosity of the dispersion at 23°C and 50 rpm being less than 100 mPas.

9. The use of a dispersion of microcapsules as claimed in claim 7 or 8 to prepare printing inks or paper-coating compositions.

## Revendications

1. Procédé de préparation d'une dispersion de microcapsules par condensation d'une résine de mélamine - formaldéhyde partiellement méthylée ayant une proportion de mélamine : formaldéhyde : méthanol de 1 : 3,0 : 2,0 à 1 : 6,0 : 4,0 dans de l'eau, où est dispersée la matière essentiellement insoluble formant le noyau des capsules, en présence d'un sel de métal alcalin d'un homo- ou d'un copolymère d'acide 2-acrylamido-2-méthylpropane-sulfonique à des valeurs de pH de 3 à 6,5 par préformage des microcapsules à une température de 20 à 50°C et durcissement subséquent de la paroi de capsule des microcapsules préformées à >50 à 100°C, **caractérisé en ce que**, pendant le durcissement, on ajoute par portions ou en continu de 5 à 100% en poids de mélamine, par rapport à la résine de mélamine - formaldéhyde.

2. Procédé selon la revendication 1, **caractérisé en ce que**, une fois atteinte la température de durcissement, on démarre une amenée d'une suspension de mélamine avec un débit massique essentiellement constant dans le temps.

3. Procédé selon la revendication 1 ou 2, **caractérisé en ce que**, pendant le durcissement, on ajoute un mélange de mélamine et d'urée avec une proportion pondérale de mélamine / urée de 1 : 20 à 20 : 1.

4. Procédé selon l'une quelconque des revendications qui précèdent, **caractérisé en ce que** la proportion pondérale de la résine de mélamine - formaldéhyde partiellement méthylée au sel de métal alcalin de l'homo- ou du copolymère d'acide 2-acrylamido-2-méthylpropane-sulfonique est de 3 : 1 à 4,5 : 1.

5. Procédé selon l'une quelconque des revendications qui précèdent, **caractérisé en ce que** la dispersion de microcapsules est chauffée à la température de durcissement par injection de vapeur 'eau dans la dispersion de microcapsules.

6. Procédé selon l'une quelconque des revendications qui précèdent, **caractérisé en ce que** la dispersion de microcapsules obtenue présente une teneur en solides d'au moins 45% en poids.

7. Dispersion de microcapsules, que l'on peut obtenir par le procédé selon l'une quelconque des revendications 1 à 6.

8. Dispersion de microcapsules comprenant un noyau constitué d'une matière essentiellement insoluble dans l'eau et d'une paroi de capsule constituée d'une résine de mélamine - formaldéhyde condensée, ou la valeur d₅₀ du diamètre des microcapsules est de l'ordre de 3 à 8 µm, le quotient (d₉₀ - d₁₀)/d₅₀ est de l'ordre de 0,3 à 0,8, la teneur en solides de la dispersion est d'au moins 48% en poids et la viscosité Brookfield de la dispersion à 23°C et 50 trs/min. est de moins de 100 mPas.

9. Utilisation de la dispersion de microparticules selon la revendication 7 ou 8 pour la préparation d'encres d'imprimerie ou de masses de couchage de papier.
